# EUROPÄISCHE PATENTSCHRIFT

(11) **EP 0 542 751 B1**
(45) Veröffentlichungstag und Bekanntmachung des Hinweises auf die Patenterteilung: **01.02.1995**
(21) Anmeldenummer: 91909755.0
(22) Anmeldetag: 23.05.1991
(51) Int. Cl.: F16J 15/44

(54) **ANORDNUNG ZUR ABDICHTUNG EINES DURCHFÜHRUNGSSPALTES ZWISCHEN EINER GEHÄUSEWAND UND EINER WELLE**
DEVICE FOR SEALING FEED-THROUGH GAPS BETWEEN THE WALL OF A HOUSING AND A SHAFT
AGENCEMENT DE FERMETURE HERMETIQUE D'UNE FENTE DE TRAVERSEE ENTRE LA PAROI D'UN CARTER ET UN ARBRE

(30) Priorität: 10.08.1990 EP 90115419
(43) Veröffentlichungstag der Anmeldung: 26.05.1993
(73) Patentinhaber: SIEMENS AKTIENGESELLSCHAFT, 80333 München (DE)
(72) Erfinder: LONGREE, Alexander, D-4330 Mülheim/Ruhr (DE)
(86) Internationale Anmeldenummer: EP9100960
(87) Internationale Veröffentlichungsnummer: WO9202747

(56) Entgegenhaltungen:
- DE-A- 3 723 729
- GB-A- 760 781

## Beschreibung

Die Erfindung betrifft eine Anordnung zur Abdichtung eines Durchführungsspaltes zwischen einer Gehäusewand und einer relativ zu dieser in Rotation versetzbaren Welle mit einem diese umgebenden, sowohl Zur Gehäusewand als auch zur Welle hin abdichtenden, relativ zur Gehäusewand verschiebbaren und durch die Welle nicht in Rotation versetzbaren Dichtring.

Derartige "Wellendichtungen" finden vielfältige Anwendung, beispielsweise in den Fällen, in denen die Durchführung einer Welle durch die Wand eines Gehäuses, in dem ein anderes Fluid als Luft einzuschließen ist, abgedichtet werden soll. Solches ist z. B. erforderlich für die Wellen von Turbogeneratoren, die mit einem Gas wie z. B. Wasserstoff gekühlt werden. Unerheblich bei der Anwendung der Dichtungen ist es dabei, ob der Druck des in dem Gehäuse einzuschließenden Fluides größer oder kleiner als der Umgebungsdruck ist.

Wellendichtungen dieser Art gehen z. B. aus der DE-A-37 23 729 und der GB-A-0 760 781 hervor. Diese Dokumente demonstrieren insbesondere vielfältige Möglichkeiten der Weiterbildungen der Wellendichtungen. Die DE-A-37 23 729 betrifft die Anordnung des Dichtringes auf der Gehäusewand mit der Durchführung, wobei der Dichtring relativ zur Gehäusewand nicht drehbar, zum Zwecke der Zentrierung jedoch leicht verschiebbar sein soll; in der GB-A-0 760 781 werden vielfältige Möglichkeiten zur Zuführung von Dicht- und/oder Schmierflüssigkeit zu den Spalten zwischen Dichtring, Gehäusewand und Welle vorgestellt.

Die Erfindung bezieht sich auf Möglichkeiten zur Kontrolle der Funktion einer Wellendichtung der vorgestellten Art. In vielen Fällen, namentlich bei elektrischen Großmaschinen und dergleichen, rotiert die Welle relativ zu Gehäusewand und Dichtring mit hoher Drehzahl (für Turbogeneratoren typisch um 3000 Umdrehungen/min.). An die Gleitfähigkeit des Dichtrings auf der Welle sind daher sehr hohe Anforderungen zu stellen, und es ist üblicherweise eine besonders leistungsfähige Schmierung vorzusehen. Wünschenswert ist in vielen Fällen eine Funktionskontrolle der Dichtung. Eine solche Funktionskontrolle wurde bereits realisiert durch Messung der Temperatur der der Welle unmittelbar benachbarten Bereiche des Dichtrings mittels geeigneter Sensoren. Diese Meßmethode weist aufgrund der Wärmekapazität des Dichtrings eine gewisse Trägheit auf; eine Verschlechterung der Gleiteigenschaften kann erst erkannt werden, wenn sich nach einer gewissen Zeitspanne der Dichtring merklich erwärmt hat, und eine Erkennung von Schäden an Dichtring und/oder Welle ist nur mit Verzögerung möglich.

Dementsprechend soll mit der Erfindung eine Möglichkeit bereitgestellt werden, Verschlechterungen der Gleitung zwischen Dichtring und Welle ohne zeitliche Verzögerung festzustellen und so gegebenenfalls zur Verhinderung materieller Schäden noch Vorkehrungen treffen zu können.

Zur Lösung dieser Aufgabe dient erfindungsgemäß eine Anordnung zur Abdichtung eines Durchführungsspaltes zwischen einer Gehäusewand und einer relativ zu dieser in Rotation versetzbaren Welle mit einem diese umgebenden, sowohl zur Gehäusewand als auch zur Welle hin abdichtenden, relativ zur Gehäusewand verschiebbaren und durch die Welle nicht in Rotation versetzbaren Dichtring, sowie mit mindestens einem Federelement das durch ein durch die Rotation auf den Dichtring ausgeübtes Drehmoment unter eine mechanische Spannung setzbar ist, sowie Mitteln zur Bestimmung der Spannung und Abgabe einer Meldung, falls die Spannung von einem vorgebbaren Normalwert wesentlich abweicht.

Dadurch, daß erfindungsgemäß das durch die Rotation der Welle auf den Dichtring ausgeübte Drehmoment unmittelbar gemessen wird, ist eine sofortige Erkennung einer Veränderung des Gleitverhaltens zwischen Welle und Dichtring möglich; es entfällt die zeitliche Verzögerung, die mit der Forderung nach einer gewissen Akkumulation der bei der Reibung erzeugten Wärmeenergie verbunden ist. Ein das Gleitverhalten des Dichtrings auf der Welle direkt beschreibender Meßwert steht zur Verfügung und kann permanent überwacht werden, nicht nur zur Erkennung bereits eingetretener Schäden, sondern zur Auffindung von Warnzeichen, daß bei fortgesetztem Betrieb Schäden bevorstehen.

Die Mittel zur Bestimmung der mechanischen Spannung des Federelementes umfassen günstigerweise einerseits mindestens einen an dem Federelement befindlichen Meßaufnehmer sowie andererseits eine damit verbundene zugehörige Auswerteeinrichtung zur Auswertung der Signale des Meßaufnehmers und zur Abgabe der erwähnten Meldung. Als Meßaufnehmer kommen insbesondere elektromechanische Sensoren in Betracht, die an entsprechende Schnittstellen üblicher elektronischer Auswerteeinrichtungen anschließbar sind. Mit Vorteil werden dabei mehrere Meßaufnemer an verschiedenen Stellen des Federelementes befestigt und in geeigneter Weise miteinander verschaltet; beispielsweise werden vier Dehnungsmeßstreifen auf dem Federelement angebracht und zu einer Wheatstone-Brücke miteinander verbunden. Auf diese Weise können Störeinflüsse auf die Messung der mechanischen Spannung, wie sie beispielsweise von Temperatureinflüssen herrühren können, unterdrückt werden. Die Meßgenauigkeit, und damit die Zuverlässigkeit der Überwachung, kann beträchtlich gesteigert werden.

Im einfachsten Fall besteht die Meldung in einem akustischen oder optischen Signal, durch das ein Bediener der Einrichtung, deren Bestandteil die Anordnung ist, zu einem Stillsetzen der Welle aufgefordert wird. Es ist jedoch im Rahmen der Erfindung auch möglich, die Meßwerte im Rahmen einer entsprechenden Automatik zur Regelung des Schmiermittelflusses zu dem Dichtring heranzuziehen; in diesem Fall ist eine Zustelleinrichtung zur Zustellung des Schmiermittels vorzusehen, die mit den Mitteln zur Spannungsmessung gekoppelt und durch die dort erzeugten Signale regelbar ist.

In günstiger Weiterbildung der Erfindung weist die Anordnung als Federelement einen Biegestab auf, der durch das auf den Dichtring ausgeübte Drehmoment verbiegbar und mit mindestens einem elektrischen Meßaufnehmer, namentlich mindestens einem Dehnungsmeßstreifen, neben einer zugehörigen elektrischen Auswerteeinrichtung, versehen ist.

Für die Anbringung des Biegestabes bestehen dabei mehrere Möglichkeiten. So kann der Biegestab fest an der Gehäusewand verankert werden; in diesem Falle ist der Dichtring beispielsweise mit einem Vorsprung zu versehen, der durch das Drehmoment gegen den Biegestab drückbar ist, so daß der Beigestab elastisch verbogen wird. Auf dem Biegestab sind in bekannter Weise Meßaufnehmer wie z. B. Dehnungsmeßstreifen aufgebracht, mit denen die Verbiegung gemessen werden kann. Statt mit einem Vorsprung kann der Dichtring natürlich auch mit einem Schlitz versehen werden, durch der Biegestab gesteckt wird. Weiterhin kann der Biegestab auch unmittelbar mit dem Dichtring verbunden werden, beispielsweise senkrecht zu der Welle in eine entsprechende Bohrung des Dichtrings eingeschraubt werden. In einem solchen Falle ist ein fest an der Gehäusewand verankertes Widerlager vorzusehen, gegen das der Biegestab durch das Drehmoment gedrückt wird. Wie erwähnt, ist der Biegestab mit entsprechenden Meßaufnehmern zu bestücken.

Im Rahmen jedweder Ausbildung der Erfindung mit einem Federelement in Form eines Biegestabes wird der Biegestab mit mehreren Meßaufnehmern versehen, die zur Bestimmung der Biegung komplementäre Signale liefern. Das Drehmoment bewirkt stets die Verbiegung des Biegestabes in einer bestimmten, bezüglich der Rotation tangentialen, Biegerichtung. Günstig ist es, jede Flanke des Biegestabes, durch die er entlang der Biegerichtung begrenzt ist, mit einem Meßaufnehmer, insbesondere einem Dehnungsmeßstreifen, zu versehen. Bei der Verbiegung entsteht an einer Flanke eine Druckspannung, an der anderen Flanke eine Zugspannung. Dies bedeutet, daß die jeweiligen Meßaufnehmer komplementäre Signale liefern, deren Kombination zur Verbesserung der Meßgenauigkeit der Spannungsmessung benutzt werden kann. Auch sind Nichtlinearitäten des Meßvorgangs unterdrückbar, so daß sich die Konfiguration eines Biegestabes mit zwei Meßaufnehmern für komplementäre Signale besonders gut zur Einbeziehung in eine Regeleinrichtung wie z. B. der erwähnten Regeleinrichtung für die Zustellung des Dicht- und/oder Schmierfluids zum Dichtring, eignet.

Neben den bekannten Dehnungsmeßstreifen kommen als Meßaufnehmer auch piezoeletrische Meßaufnehmer in Frage; derartige Meßaufnehmer werden im Sinne der Erfindung günstigerweise derart eingesetzt, daß sie zwischen ein mit der Gehäusewand fest verbundenes Widerlager und einen Vorsprung des Dichtrings eingefügt werden; durch das Drehmoment drückt der Vorsprung gegen das Widerlager und preßt somit den piezoelektrischen Meßaufnehmer, wodurch eine mit üblichen Mitteln zu messende elektrische Spannung entsteht.

Selbstverständlich können mehrere Arten von Meßaufnehmern vorgesehen werden, womit einerseits eine aus Sicherheitsgründen interessante Redundanz in die Spannungsmessung einfügbar ist und andererseits die Genauigkeit des Meßvorgangs durch Kombination mehrerer Meßmethoden mit eventuell voneinander abweichenden Meßbereichen erhöht werden kann.

Die weitere Erläuterung der Erfindung erfolgt anhand der in der Zeichnung dargestellten Ausführungsbeispiele; im einzelnen zeigen:
Figur 1 eine schematisierte Darstellung der überwachbaren Wellendichtung nach der Erfindung;
Figur 2 eine spezielle Weiterbildung der erfindungsgemäßen Wellendichtung;
Figur 3 eine Skizze zur besonders vorteilhaften Anordnung der Meßaufnehmer im Rahmen der Erfindung.

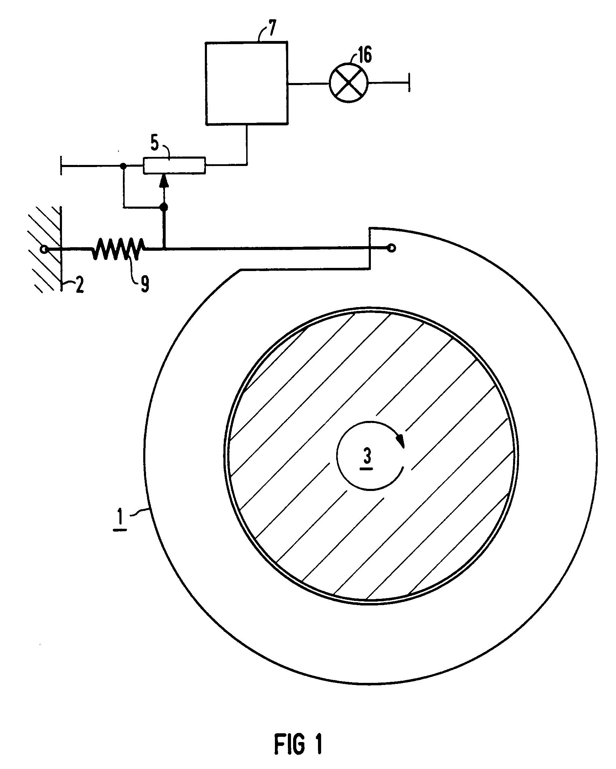

Figur 1 zeigt einen Dichtring 1, der die Durchführung der Welle 3 aus einem Gehäuse - die Gehäusewand 2 ist hier lediglich skizziert - abdichtet. An seinem Außenumfang ist der Dichtring nicht vollständig kreisförmig, was im übrigen im Sinne der Erfindung auch nicht unbedingt erforderlich ist - die Bezeichnung ist in erster Linie bezogen auf die kreisförmige bzw. kreiszylindrische Gestaltung des Innenumfanges des Dichtringes 1. Zwischen dem Dichtring 1 und der Gehäusewand 2 ist eine Feder 9 - hier dargestellt als einfache Schraubenfeder - eingefügt; wenn die Welle 3 rotiert, wird auf den Dichtring 1 ein gewisses Drehmoment ausgeübt, das seinerseits zu einer Kraft auf die Feder 9 führt, wodurch diese im konkreten Fall auseinandergezogen wird. Die Verlängerung der Feder 9 wird bestimmt mit einem Meßaufnehmer 5; dies ist beispielsweise ein Potentiometer mit einem verschiebbaren Kontakt, der mit dem Ende der Feder 9 verbunden ist, das in weitgehend starrer Verbindung mit dem Dichtring 1 steht. Das Auseinanderziehen der Feder 9 bewirkt eine Verschiebung des Schleifers auf dem Potentiometer, womit die elektrischen Eigenschaften des Meßaufnehmers 5 verändert werden, was mittels der elektrischen Auswerteeinrichtung 7 feststellbar ist. Der Auswerteeinrichtung 7 wird ein Normalwert für das von der Welle 3 auf den Dichtring 1 ausgeübte Drehmoment vorgegeben; dies ist in der Regel der Wert, der sich beim normalen Betrieb einstellt. Die Auswerteeinrichtung 7 vergleicht den über den Meßaufnehmer 5 festgestellten Wert mit dem vorgegebenen Normalwert und gibt eine Meldung, falls der Meßwert von dem Normalwert wesentlich abweicht. Diese Meldung besteht im konkreten Fall z. B. darin, daß die Lampe 16 zum Aufleuchten gebracht wird; selbstverständlich sind beliebige Formen der Meldung, akustische Signale oder elektrische Signale an weitere Steuereinrichtungen der gesamten Anlage, denkbar.

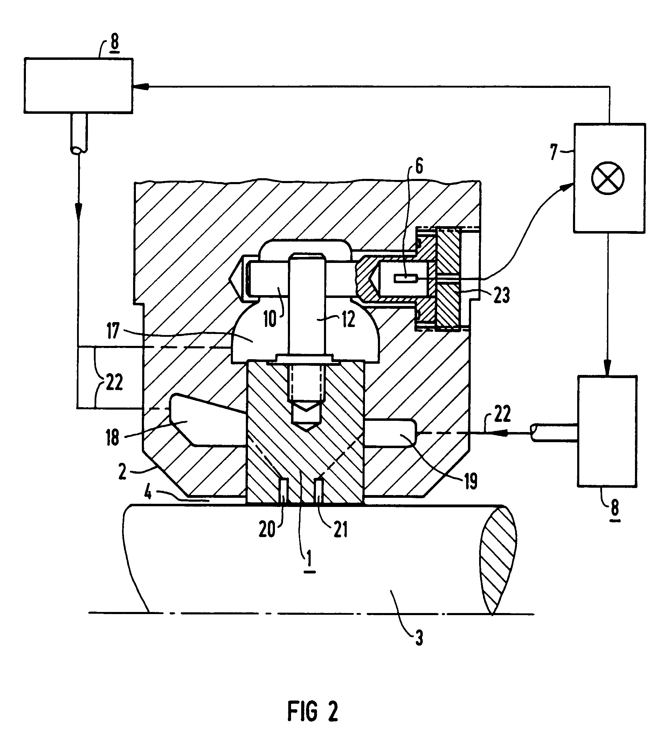

Vorschläge zur Weiterbildung der Erfindung sind in Figur 2 dargestellt. Figur 2 zeigt den Dichtring 1, der in eine entsprechende Ausnehmung der Gehäusewand 2 eingefügt ist und zur Abdichtung des Durchführungsspaltes 4 zwischen Gehäusewand 2 und Welle 3 dient. Um eine Überwachung des durch die rotierende Welle 3 auf den Dichtring 1 übertragenen Drehmomentes zu realisieren, ist in die Gehäusewand 2 ein Federelement in Form eines Biegestabes 10 eingebracht und mittels eines Bolzens 23 fixiert. Gegen den Biegestab 10 wird durch das Drehmoment ein Vorsprung 12 am Dichtring 1 gedrückt. Hierdurch wird der Biegestab 10 elastisch verbogen; die Verbiegung wird mittels eines Dehnungsmeßstreifens 6 in Verbindung mit einer entsprechenden Auswerteeinrichtung 7 gemessen und weiterverarbeitet. Im dargestellten Fall wird der Dichtring 1 im wesentlichen vollständig von Öl umspült; der Außenumfang des Dichtrings 1 ragt im wesentlichen vollständig in eine Ölnut 17, in der sich auch der Biegestab 10 und der Vorsprung 12 befinden. Dementsprechend muß der Biegestab 10 dichtend in die Gehäusewand 2 eingebracht werden, um Leckagen aus der Ölnut 17 zu vermeiden. Dadurch erklärt sich die etwas komplizierte Befestigung des Biegestabes 10. Der Dehnungsmeßstreifen 6 befindet sich im Inneren des Biegestabes 10, was zwar unter Umständen eine Verringerung der Meßgenauigkeit mit sich bringt, jedoch notwendig ist, da der Dehnungsmeßstreifen nicht von Flüssigkeit benetzt werden darf. Auch den Seitenflanken des Dichtrings 1 wird durch Ölnuten 18 und 19 Öl zu Schmier- und/oder Dichtzwecken zugeführt; dies ist erforderlich, um einerseits die Gleitfähigkeit des Dichtrings 1 relativ zur Gehäusewand 2 sicherzustellen und andererseits eine möglichst vollständige Dichtung des Durchführungsspaltes 4 zu erzielen. Auch der Innenumfang des Dichtrings 1 ist mit Ölnuten 20 und 21 versehen; das Vorsehen einer Ölnut ist in der Regel notwendig zur Schmierung und Dichtung; mittels zweier Ölnuten 20, 21 kann darüber hinaus verhindert werden, daß sich das gesamte Öl, das zur Schmierung und Dichtung verwendet wird, mit einem in dem Gehäuse abzuschließenden Gas (beispielsweise Wasserstoff bei Turbogeneratoren) anreichert. Durch das Vorsehen zweier getrennter Ölsysteme kann die Kontamination des Öls in ausreichendem Maß beschränkt werden. Im dargestellten Fall erfolgt die Zustellung des Öls zu den erwähnten Ölnuten 17, 18, 19, 20 und 21 durch Ölleitungen 22 von Zustelleinrichtungen 8. Die Zustelleinrichtungen 8 sind verbunden mit der Auswerteeinrichtung 7 und durch diese regelbar. Damit können die Gleiteigenschaften des Dichtrings 1 auf der Welle 3 durch Regelung des Öldrucks gesteuert werden. Der in Figur 2 dargestellte einzelne Dehnungsmeßstreifen 6 ist anzusehen als Stellvertreter für eine Mehrzahl von Meßaufnehmern. Der Biegestab 10 ist von Öl umspült und wird dementsprechend einer Druckbelastung ausgesetzt, die selbstverständlich auch von einem auf dem Biegebalken 10 angebrachten Meßaufnehmer wahrgenommen wird. Außerdem sind Temperaturschwankungen in dem Dichtöl, die gleichermaßen einen Meßaufnehmer beeinflussen, nicht ausgeschlossen. Im Rahmen einer Anordnung nach Figur 2 kommt es daher besonders darauf an, die Messung der mechanischen Spannung des Biegestabes 10 von Störeinflüssen fernzuhalten. Dies kann, wie bereits erwähnt, mit einer Brückenschaltung aus vier Meßaufnehmern erreicht werden.

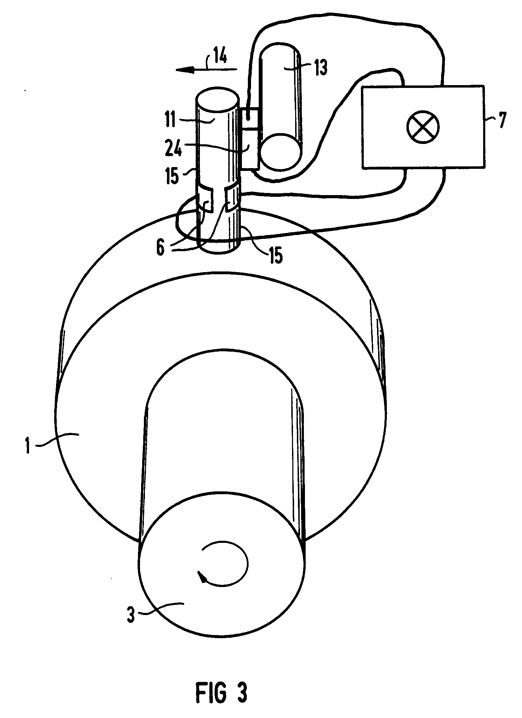

Figur 3 zeigt eine weitere, schematisierte Darstellung von Möglichkeiten zur Weiterbildung der erfindungsgemäßen Wellendichtung. Die Welle 3 ist von einem Dichtring 1 umgeben; an dem Dichtring 1 angeformt ist ein Federelement in Form eines Biegestabes 11, der, ähnlich der Darstellung in Figur 2, in den Dichtring 1 eingeschraubt sein kann. Durch das von der Welle 3 bewirkte Drehmoment auf den Dichtring 1 wird der Biegestab 11 gegen ein Widerlager 13 gedrückt, das mit dem aus Gründen der Klarheit nicht dargestellten Gehäuse fest verbunden ist. Zwischen dem Biegestab 11 und dem Widerlager 13 ist ein piezoelektrischer Meßaufnehmer 24 eingefügt, der zusammengepreßt wird, wenn der Biegestab 11 gegen das Widerlager 13 drückt. Durch die Zusammenpressung entsteht an dem piezoelektrischen Meßaufnehmer 24 eine elektrische Spannung, die in einer entsprechenden Auswerteeinrichtung 7 meßbar und verwertbar ist. Die Verbiegung des Biegestabes 11 durch das von der rotierenden Welle 3 erzeugte Drehmoment erfolgt in einer bezüglich der Rotation tangentialen Biegerichtung 14. An jeder Flanke 15, durch die der Biegestab 11 entlang der Biegerichtung 14 begrenzt ist, ist er mit einem Dehnungsmeßstreifen 6 versehen. Auf diese Weise stehen zur Bestimmung der Verbiegung des Biegestabes 11 der mit den Dehnungsmeßstreifen 6 verbundenen Auswerteeinrichtung 7 zwei komplementäre Signale zur Verfügung, womit eine deutliche Verbesserung der Meßgenauigkeit erzielt werden kann.

Die Erfindung ermöglicht die Abdichtung eines Durchführungsspaltes zwischen einer Gehäusewand und einer relativ zu dieser in Rotation versetzbaren Welle mit einem diese umgebenden Dichtring, wobei die Gleiteigenschaften des Dichtrings auf der Welle jederzeit meßbar und zur alsbaldigen Erkennung sich anbahnender Schäden auswertbar sind.

## Patentansprüche

1. Anordnung zur Abdichtung eines Durchführungsspaltes (4) zwischen einer Gehäusewand (2) und einer relativ zu dieser in Rotation versetzbaren Welle (3) mit einem diese umgebenden, sowohl zur Gehäusewand (2) als auch zur Welle (3) hin abdichtenden, relativ zur Gehäusewand (2) verschiebbaren und durch die Welle (3) nicht in Rotation versetzbaren Dichtring (1), gekennzeichnet durch mindestens ein Federelement (9, 10, 11), das durch ein durch die Rotation auf den Dichtring (1) ausgeübtes Drehmoment unter eine mechanische Spannung setzbar ist und Mittel (5, 6, 24; 7) zur Bestimmung der Spannung und Abgabe einer Meldung, falls die Spannung von einem vorgebbaren Normalwert wesentlich abweicht.

2. Anordnung nach Anspruch 1, wobei die Mittel (5, 6, 24; 7) zur Bestimmung der Spannung mindestens einen an dem Federelement (9, 10, 11) befindlichen Meßaufnehmer (5, 6, 24) und eine damit verbundene zugehörige Auswerteeinrichtung (7) zum Betrieb der Meßaufnehmer (5, 6, 24) und zur Abgabe der Meldung umfassen.

3. Anordnung nach Anspruch 1 oder 2 mit mindestens einer Zustelleinrichtung (8) zur Zustellung eines Schmiermittels zu dem Dichtring (1), die mit den Mitteln (5, 6, 24; 7) zur Bestimmung der Spannung gekoppelt und durch diese regelbar ist.

4. Anordnung nach einem der Ansprüche 1 bis 3 mit
a) mindestens einem Biegestab (10, 11) als Federelement (9, 10, 11), der durch das Drehmoment unter Spannung setzbar ist;
b) mindestens einem elektrischen Meßaufnehmer (5, 6, 24), insbesondere mindestens einem Dehnungsmeßstreifen (6), auf dem Biegestab (10, 11), der mit einer zugehörigen elektrischen Auswerteeinrichtung (7) verbunden ist.

5. Anordnung nach Anspruch 4, wobei
a) der Biegestab (10) mit der Gehäusewand (2) fest verbunden ist;
b) der Dichtring (1) einen Vorsprung (12) hat, der durch das Drehmoment unter Verbiegung gegen den Biegestab (10) drückbar ist.

6. Anordnung nach Anspruch 4, wobei der Biegestab (11) mit dem Dichtring (1) fest verbunden sowie durch das Drehmoment gegen ein mit der Gehäusewand (2) fest verbundenes Widerlager (13) drückbar und verbiegbar ist.

7. Anordnung nach Anspruch 5 oder 6, wobei
a) der Biegestab (10, 11) durch das Drehmoment in einer Biegerichtung (14) verbiegbar ist;
b) der Biegestab (10, 11) entlang der Biegerichtung (14) durch zwei Flanken (15) begrenzt ist und jede Flanke (15) einen Dehnungsmeßstreifen (6) aufweist.

8. Anordnung nach Anspruch 4, wobei
a) der Dichtring (1) einen Vorsprung (12) hat, der durch das Drehmoment gegen ein mit der Gehäusewand (2) fest verbundenes Widerlager (13) drückbar ist;
b) zwischen dem Vorsprung (12) und dem Widerlager (13) ein piezoelektrischer Meßaufnehmer (24) eingefügt ist.

## Claims

1. An arrangement for sealing off a duct gap (4) between a housing wall (2) and a shaft (3) to be set into rotation relative to the housing wall with a sealing ring (1), which surrounds the said shaft, has a sealing function relative to both the housing wall (2) and the shaft (3), is displaceable relative to the housing wall (2) and not able to be set into rotation by the shaft (3), characterised by at least one spring element (9, 10, 11), which can be placed under a mechanical strain by a torque exerted upon the sealing ring (1) by the rotation of the shaft, and means (5, 6, 24; 7) for determining the strain and for issuing a report if the strain deviates substantially from a predeterminable normal value.

2. An arrangement according to claim 1, wherein the means (5, 6, 24; 7) for determining the strain include at least one measurement pickup (5, 6, 24) arranged on the spring element (9, 10, 11), and an associated evaluation device (7) connected to said measurement pickup for operating the measurement pickup (5, 6, 24) and for issuing the report.

3. An arrangement according to claim 1 or 2 with at least one delivery device (8) for delivering a lubricant to the sealing ring (1), said delivery device being coupled to and regulatable by the means (5, 6, 24; 7) for determining the strain.

4. An arrangement according to one of claims 1 to 3 with:
a) at least one bending bar (10, 11) as the spring element (9, 10, 11), which is to be placed under strain by the torque;
b) at least one electrical measurement pickup (5, 6, 24), in particular at least one strain gauge (6), on the bending bar (10, 11), which strain gauge is connected to an associated electrical evaluation device (7).

5. An arrangement according to claim 4, wherein:
a) the bending bar (10) is firmly joined to the housing wall (2);
b) the sealing ring (1) has a protrusion (12), which can be pressed by the torque against the bending bar (10) by bending.

6. An arrangement according to claim 4, wherein the bending bar (11) is firmly joined to the sealing ring (1) and can be pressed and flexed by the torque against an abutment (13) firmly joined to the housing wall (2).

7. An arrangement according to claim 5 or 6, wherein:
a) the bending bar (10, 11) can be bent by the torque in a bending direction (14);
b) the bending bar (10, 11) is defined along the bending direction (14) by two sides (15) and each side (15) comprises a measurement gauge (6).

8. An arrangement according to claim 4, wherein:
a) the sealing ring (1) has a protrusion (12), which can be pressed by the torque against an abutment (13) firmly joined to the housing wall (2);
b) a piezoelectric measurement pickup (24) is disposed between the protrusion (12) and the abutment (13).

## Revendications

1. Dispositif pour fermer de façon étanche une fente de traversée (4) entre une paroi (2) d'un carter et un arbre (3) qui peut être entraîné en rotation par rapport à cette paroi, comprenant une bague d'étanchéité (1), qui entoure cet arbre, établit une étanchéité aussi bien par rapport à la paroi (2) du carter que par rapport à l'arbre (3), peut être déplacée par rapport à la paroi (2) du carter et ne peut pas être entraînée en rotation par l'arbre (3), caractérisé par au moins un élément élastique (9,10,11), qui peut être soumis à une contrainte mécanique par un couple appliqué par la rotation à la bague d'étanchéité (1), et par des moyens (5,6,24;7) destinés à déterminer la contrainte et émettre une signalisation dans le cas où la contrainte s'écarte sensiblement d'une valeur normale pouvant être prédéterminée.

2. Dispositif suivant la revendication 1, dans lequel les moyens (5,6,24;7) servant à déterminer la contrainte comprennent au moins un capteur de mesure (5,6, 24), se trouvant sur l'élément élastique (9,10,11), et un dispositif d'évaluation (7) associé, qui est relié à ce capteur et qui sert à faire fonctionner les capteurs de mesure (5,6,24) et à émettre la signalisation.

3. Dispositif suivant la revendication 1 ou 2, comportant au moins un dispositif d'alimentation (8) servant à appliquer un lubrifiant à la bague d'étanchéité (1) et qui est couplé aux moyens (5,6,24;7) de détermination de la contrainte et est réglable à l'aide de ces moyens.

4. Dispositif suivant l'une des revendications 1 à 3, comportant
a) au moins un barreau flexible (10,11) en tant qu'élément élastique (9,10,11), qui peut être placé sous contrainte au moyen du couple;
b) au moins un capteur de mesure électrique (5,6,24), notamment au moins une jauge extensométrique (6), placé sur le barreau flexible (10,11), et relié au dispositif d'évaluation électrique associé (7).

5. Dispositif suivant la revendication 4, dans lequel
a) le barreau flexible (10) est relié rigidement à la paroi (2) du carter;
b) la bague d'étanchéité (1) a une partie saillante (12), qui peut être repoussée par le couple sur le barreau flexible (10), tout en se déformant,

6. Dispositif suivant la revendication 4, dans lequel le barreau flexible (11) est relié rigidement à la bague d'étanchéité (1) et peut être repoussé par le couple sur une butée (13) reliée rigidement à la paroi (2) du carter et peut se déformer.

7. Dispositif suivant la revendication 5 ou 6, dans lequel
a) le barreau flexible (10,11) peut être déformé, par le couple, dans une direction de flexion (14);
b) le barreau flexible (10,11) est délimité, dans la direction de flexion (14), par deux flancs (15) et chaque flanc (15) comporte une jauge extensométrique (6).

8. Dispositif suivant la revendication 4, dans lequel
a) la bague d'étanchéité (1) a une partie saillante (12), qui peut être repoussée sous l'effet du couple sur une butée (13) reliée rigidement à la paroi (2) du carter;
b) un capteur de mesure piézoélectrique (24) est inséré entre la partie saillante (12) et la butée (13).
